# EUROPEAN PATENT APPLICATION

(11) **EP 3 026 104 A1**
(43) Date of publication of application: **01.06.2016**
(21) Application number: 14194764.8
(22) Date of filing: 25.11.2014
(51) Int. Cl.: C12G 3/08, C12G 3/10, C12C 11/11

(54) **Beer or cider concentrate**

(71) Applicant: Anheuser-Busch InBev S.A., 1000 Brussels (BE)
(72) Inventor: DE SCHUTTER, David, 3000 Leuven (BE); ADAM, Pierre, 3000 Leuven (BE); DEBYSER, Winok, 3000 Leuven (BE)
(74) Representative: BiiP cvba

(57) **Abstract**

The present invention concerns a method for preparing beer or cider concentrate comprising alcohol and volatile components of beer or cider flavour, and further beer or cider prepared therefrom. In particular, the invention concerns a two-step concentration method wherein the first step involves a high efficiency nanofiltration that results in a highly concentrated retentate and a aqueous permeate fraction comprising alcohol and volatile flavour components, and wherein the second step involves removing water from said permeate fraction to obtain a highly concentrated alcohol solution also comprising volatile flavour components, which is then combined with the retentate from the first step to a final high-alcohol and flavour beer or cider concentrate.

## Description

### TECHNICAL FIELD

The present invention concerns a method for preparing beer or cider concentrate comprising alcohol and flavour components, and further beer or cider, respectively prepared therefrom. In particular, the invention concerns a two-step concentration method wherein the first step involves a high-pressure nanofiltration that results in a highly concentrated retentate and an aqueous permeate fraction comprising alcohol and volatile flavour components, and wherein the second step involves removing water from said permeate fraction to obtain a highly concentrated alcohol solution comprising volatile flavour components, said fraction being then combined with the retentate from the first step to a final beer or cider concentrate.

### BACKGROUND OF THE INVENTION

The major benefit of producing concentrates is the reduction in weight and volume which allows to save on storage and transportation costs, in addition to also often having favourable effect on improving shelf life of a product. Since beers and many other alcoholic beverages in general contain about 80 to 90% water, it has naturally been recognised that the most economical way to store or distribute them over considerable distances would be in the form of a concentrate.

In principle, a concentrate can be reconstituted to the initial product at any place at and time by the addition of the solvent, usually water. Nevertheless, it is not straightforward to produce an alcoholic beverage concentrate, the main difficulty lying in the fact that most concentration procedures lead to reduction in alcohol and losses in many flavour or aroma components. Beer in particular is a very challenging alcoholic beverage to produce a concentrate from because, unlike beverages produced from fruit juice fermentation such as wine, perry, or cider; the aromas present in beer are subtler and much less concentrated, which means that losing even a small portion of them at the concentration stage will have a profound effect on the organoleptic perception of the final rehydrated product. In addition, because of the great popularity of the drink and existence of a wide public of demanding beer aficionados, the reconstituted drink is expected to meet expectations with regard to its distinctive aroma, taste, mouthfeel, foaming properties, colour, and even haze perception. Reconstituted beer simply cannot taste like a diluted beer missing some characteristics; for gaining consumer acceptance it simply must have all the qualities of the "real" unprocessed beer.

Methods for producing beer concentrates and then rehydrating them into final beverages are known in the art. Various methods for concentrating alcoholic beverages that are known in the brewing industry include such processes as freeze-drying, reverse osmosis, and filtration. All of these methods start with a substantially finished beer and then remove the water. The resulting concentrated beverages can then be transported more cost-effectively and then reconstituted at a final destination by addition of water, carbon dioxide, and alternatively also alcohol.

An example of one method for preparation of a reconstitutable beer concentrate can be found in GB2133418. The method is based on subjecting beer to reverse osmosis and results in a low alcohol concentrate which can be rehydrated to a low-alcohol beer.

Conversely, US4265920 and US4532140 teach two-step methods for obtaining a high-alcohol beer concentrate that can be reconstituted to beers of normal alcohol content. The method of US4265920 comprises a first distillation step to separate ethanol and volatile aroma components from the retentate comprising the rest of the beer components, which is followed by a second step comprising a rather costly freeze-concentration procedure to concentrate the retentate from the first step. Finally, the distilled ethanol from step 1 is combined with the freeze-concentrated retentate from step 2, resulting in the final ethanol-enriched beer concentrate. The method of US4532140, on the other hand, in the first step subjects beer to ultrafiltration to obtain a concentrated retentate and an aqueous permeate that is then, in the second step subjected to reverse osmosis t concentrate ethanol and volatile compounds; lastly, the alcohol fraction from step 2 is pulled with the retentate from step 1 to obtain the final beer concentrate.

Although at least some of the above described methods provide a general approach for concentrating beer including its alcohol content and, to some extent, volatile components, they achieve their goal at the cost of reaching high concentration factors and only provide final concentrates of a volume half or at most one third of the volume of the starting beer. Therefore, there clearly exists place for improvement and provision of more concentrated beer bases providing further reduction in transport and storage costs.

The present invention provides a method for producing a naturally alcohol-enriched beer concentrate of high density, said method providing an advantageous concentration factor potential of at least 5, 10, 15, up to 20 or more, while at the same time ensuring high and optionally selective retention of natural beer flavouring compounds, including the volatile ones.

These and other advantages of the present invention are presented in continuation.

### SUMMARY OF THE INVENTION

The present invention is defined in the appended independent claims. Preferred embodiments are defined in the dependent claims. In particular, the present invention concerns method for preparing beer or cider concentrate comprising the steps of:
a) Subjecting beer (1) to a first concentration step comprising nanofiltration (A) or reverse osmosis to obtain a retentate (2) and a fraction comprising alcohol and volatile flavour components (3), wherein the retentate (2) is characterised by the concentration of unfilterable compounds to or higher than 20% (w/w), preferably 30% (w/w), most preferably 40% (w/w), as calculated from density measurement corrected for the alcohol amount;
b) Subjecting the fraction comprising alcohol and volatile flavour components to a next concentration step comprising fractionation, preferably being distillation, or reverse osmosis, to obtain a concentrated fraction comprising alcohol and volatile flavour components, and a leftover fraction;
c) Combining the retentate from a) with the concentrated fraction comprising alcohol and volatile flavour components from b).

In a further aspect, the present invention also concerns a method for preparing beer comprising the steps of:
a) Obtaining the beer concentrate according to the above-stated method;
b) Diluting said concentrate from step a) with water or carbonated water.

Lastly, the present invention further provides a beer concentrate having extract density equal to or higher than at least 18 °P, preferably at least 20 °P, more preferably at least 25 °P, and preferably further comprising alcohol concentration comprised between 25 - 70 % ABV, preferably between 30 - 50 % ABV

### BRIEF DESCRIPTION OF THE FIGURES

For a fuller understanding of the nature of the present invention, reference is made to the following detailed description taken in conjunction with the accompanying drawings in which:

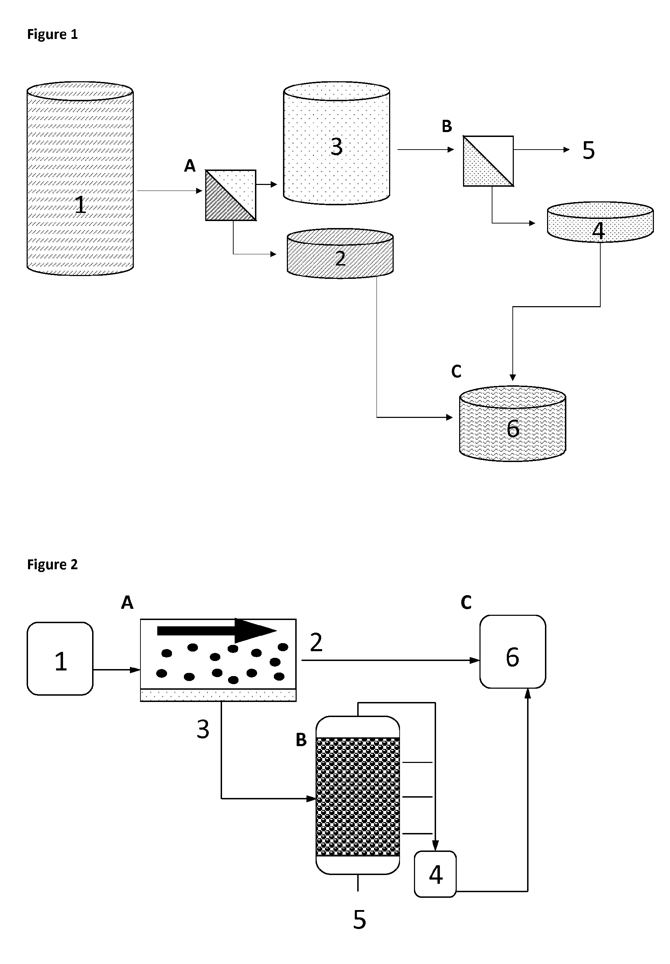

**Figure 1****:** shows a block diagram schematically illustrating key steps of the method according to the present invention. A - first concentration step comprising nanofiltration; B - second concentration step; C - combining of products from the first and second concentration steps; 1 - beer subjected to nanofiltration; 2 - retentate; 3 - permeate comprising ethanol and volatile aroma components; 4 - concentrated fraction comprising alcohol and volatile flavour components; 5 - leftover fraction from the second concentration step; 6 - final beer concentrate.
**Figure 2****:** shows a schematic diagram of a preferred embodiment of the method according to the invention, wherein the second concentration step (B), comprises distillation. Reference signs as in Figure 1.

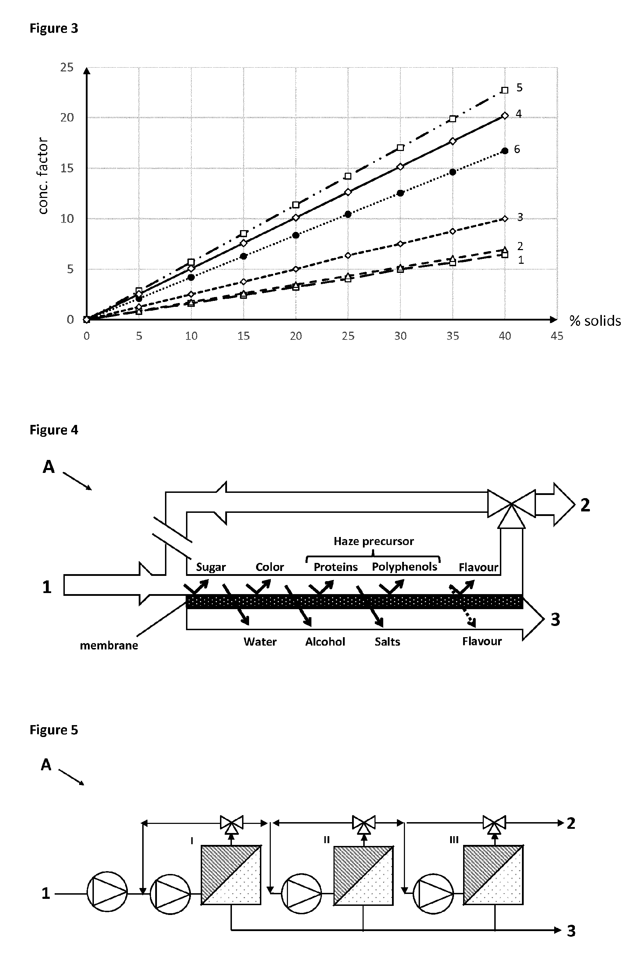

**Figure 3****:** illustrates a principle of nanofiltration in the first concentration step a) according to one embodiment involving cross-flow circulation of the retentate at the surface of the membrane. Compounds indicated as remaining in retentate "2" are blocked by the membrane, whereas compounds indicates as passing to permeate "3" diffuse through the membrane. Reference signs as in Figure 1.
**Figure 4****:** schematically illustrates an embodiment of the nanofiltration step a) in a continuous arrangement comprising 3 cross-flow circulation stages (I, II, III) with recirculation as shown in Figure 3. The retentate is progressing from one stage to the next one while becoming more and more concentrated. I, II, II - units and stages of nanofiltration of said embodiment; the remaining reference signs as in Figure 1.
**Figure 5****:** shows a graph illustrating the relationship between the concentration factors of different retentates (2) obtained from different beers (beer 1-4), and the amount of unfilterable compounds ("% solids") achieved is said retentates following the first concentration step according to the method of the invention.

### DEFINITIONS

As used herein, the term *"concentrate"* is given the definition of Oxford dictionary: "A *substance made by removing or reducing the diluting agent; a concentrated form of something"* (cf. http://www.oxforddictionaries.com/definition/english/concentrate). In line with this, the term *"beer* or cider *concentrate"* or, alternatively *"(concentrated) beer or cider base"* or *"beer or cider syrup",* is meant to relate to beer or cider, respectively which had the majority of its solvent component - i.e. water - removed, while retaining most of the dissolved components conferring such features as taste, smell, colour, mouthfeel etc.

As used herein, the term *"beer"* is to be construed according to a rather broad definition:
*"the drink obtained by fermenting from a wort, prepared with starchy or sugary raw materials, including hop powder or hop extracts and drinkable water. Aside from barley malt and wheat malt, only the following may be considered for brewing, mixed with e.g. wheat malt, starchy or sugary raw materials in which the total quantity may not exceed 80%, preferably 40% of the total weight of the starchy or sugary raw materials:*
   *(a) maize, rice, sugar, wheat, barley and the various forms of them.*
   *(b) saccharose, converted sugar, dextrose and glucose syrup.*
Although according to certain national legislations, not all fermented malt-based beverages can be called beer, in the context of the present invention, the term *"beer"* and *"fermented malt based beverage"* are used herein as synonyms and can be interchanged. It follows, that as used herein the terms *"reconstituted beer"* and *"reconstituted fermented malt based beverage"* are to be understood as beverages composition-wise substantially identical to beer but obtained by addition of the solvent, i.e. water or carbonated water, to a previously prepared beer concentrate.

Next, as used herein, the term *"cider"* is to be understood as every alcoholic beverage resulting from the fermentation of apple juice or apple juice mixed with up to 10% pear juice. This term also encompasses the any product of this fermented apple juice further modified by adding such standard cider manufacturing additives as acids (citric or tartaric) and/or sugar, filtering, cooling, saturating with carbon dioxide, pasteurizing, etc., which is commercialized under the term cider.

As used herein, the term *"unfilterable compounds"* is to be understood as referring to all the diverse compounds comprised in any type of beer or cider, which cannot pass through a nanofiltration membrane, i.e. beer compounds having the mean size greater than 150 Da, 180 Da, or 200 Da, which is the molecular weight retention size cut-off depending on a given nanofiltration membrane. As opposed to the *"filterable compounds"* comprising water, monovalent and some bivalent ions, low molecular alcohols such as ethanol, low molecular esters and a number of volatile flavour components, the unfilterable compounds mainly include sugars, mostly polysaccharides; sugar alcohols, polyphenols, pentosans, peptides and proteins, high molecular weight alcohols, high molecular weight esters, partially multivalent ions, and many other mainly organic and highly divergent compounds that vary depending on the beer or cider type. Due the complexity and discrepancies between different beer or cider compositions, the collective concentration of the unfilterable compounds is often referred to (in great simplification and without being exact) as "concentration of sugars" or "concentration of solids" and can be easily calculated from mass balance considerations taking into account of parameters such as density, viscosity, beer rheology, original gravity or extract, real gravity or extract, degree of fermentation (RDF) and/or alcohol content. In brewing practice, the concentration of unfilterable compounds is routinely estimated from density (real extract) measurement corrected for the density of the measured ethanol amount, ethanol being the most prevalent compound of density < 1 g/cm³ and therefore affecting the density measurement most substantially. Such measurements are well known in the art, are routinely performed using standard beer analysing systems like Anton Paar Alcolyzer device, and thus are readily and easily performable by any person skilled in beer brewing.

The amount of components dissolved in beer can also be expressed as so called specific gravity (relative density) or apparent specific gravity. The first one is measured as density (weight per unit volume) of beer divided by the density of water used as a reference substance, whereas the second one as the weight of a volume of beer to the weight of an equal volume of water. For example, a specific gravity of 1.050 ("50 points") indicates that the substance is 5% heavier than an equal volume of water. The densities of water, and consequently also beer, vary with temperature; therefore for both specific gravity and apparent specific gravity the measurement of the sample and the reference value is done under the same specified temperature and pressure conditions. Pressure is nearly always 1 atm equal to 101.325 kPa, while temperatures may differ depending on the choice of further systems for approximating beer density. Examples of such systems are two empirical scales, Plato and the Brix scale, that are commonly used in brewing and wine industries, respectively. Both scales represent the strength of the solution as percentage of sugar by mass; one degree Plato (abbreviated °P) or one degree Brix (symbol °Bx) is 1 gram of sucrose in 100 grams of water. There is a difference between these units mainly due to both scales being developed for solutions of sucrose at different temperatures, but it is so insignificant that they may be used virtually interchangeably. For example, beer measured at 12° Plato at 15.5°C has the same density as a water-sucrose solution containing 12% sucrose by mass at 15.5°C, which is approximately equal to 12° Brix, being the same density as a water-sucrose solution containing 12% sucrose by mass at 20°C. The Plato and Brix scales have an advantage over specific gravity in that they expresses the density measurement in terms of the amount of fermentable materials, which is particularly useful at early stages of brewing. As, of course, both beer and wort are composed of more solids than just sucrose, it is not exact. The relationship between degrees Plato and specific gravity is not linear, but a good approximation is that 1°P equals 4 "brewer's points" (4 x 0.001); thus 12° Plato corresponds to specific gravity of 1.048 [1+(12 x 4 x .001)].

. The term *"original gravity"* or *"original extract"* refers to specific gravity as measured before fermentation, whereas the term *"final gravity"* or *"final extract"* relates to specific gravity measured at the completion of fermentation. In general, gravity refers to the specific gravity of the beer at various stages in its fermentation. Initially, before alcohol production by the yeast, the specific gravity of wort (i.e. the ground malt before beer fermentation) is mostly dependent on the amount of sucrose. Therefore, the original gravity reading at the beginning of the fermentation can be used to determine sugar content in Plato or Brix scales. As fermentation progresses, the yeast convert sugars to carbon dioxide, ethanol, yeast biomass, and flavour components. The lowering of the sugar amount and the increasing presence of ethanol, which has appreciably lesser density than water, both contribute to lowering of the specific gravity of the fermenting beer. Original gravity reading compared to final gravity reading can be used to estimate the amount of sugar consumed and thus the amount of ethanol produced. For example, for a regular beer, original gravity could be 1.050 and final gravity could be 1.010. Similarly, knowing original gravity of a beverage and its alcohol amount can be used to estimate the amount of sugars consumed during the fermentation. The degree to which sugar has been fermented into alcohol is expressed with the term *"real degree of fermentation"* or "RDF", and is often given as a fraction of original gravity transformed into ethanol and CO₂. The RDF of beer is in theory indicative of its sweetness as beers usually have more residual sugar and thus lower RDF.

Concentration steps may involve any of the variety of techniques recognised in the art, which allow partial or substantial separation of water from the beer and thus retention of most of the dissolved therein components in a lower than initial volume. Many of the techniques currently used within the beverage industry rely on the so called membrane technologies, which provide a cheaper alternative to conventional heat-treatment processes and involve separation of substances into two fractions with the help of a semipermeable membrane. The faction comprising particles smaller than the membrane pore size passes through the membrane and, as used herein is referred to as *"permeate"* or *"filtrate".* Everything else retained on the feed side of the membrane as used herein is referred to as *"retentate".*

Typical membrane filtration systems include for example pressure-driven techniques microfiltration, ultrafiltration, nanofiltration and reverse osmosis. As used herein, the term *"microfiltration"* refers to a membrane filtration technique for the retention of particles having size of 0.1 to 10 µm and larger. Usually, microfiltration is a low-pressure process, typically operating at pressures ranging from 0.34 - 3 bar¹. Microfiltration allows separation of particles such as yeast, protozoa, large bacteria, organic and inorganic sediments etc. Then, as used herein, the term *"ultrafiltration"* designates a membrane filtration technique for the retention of particles having size of about 0.01 µm and larger. Ultrafiltration usually retains particles having molecular weight greater than 1000 Dalton, such as most viruses, proteins of certain sizes, nucleic acids, dextrins, pentosan chains ect. Typical operating pressures for ultrafiltration range from 0.48 - 10 bar. Further, as used herein the term *"nanofiltration"* shall be understood as a membrane filtration technique for the retention of particles having size of 0.001 µm to 0.01 µm and larger. Nanofiltration is capable of retaining divalent or multivalent ions, such as divalent salts, and most organic compounds larger than appox. 180 Dalton, which include oligosaccharides and many flavour compounds; while allowing water, ethanol, monovalent ions, and some organic molecules such as many aromatic esters pass through. Operating pressures of 8 - 41 bar are typical for nanofiltration. Where nanofiltration is operated under inlet pressure within the upper end of this range, from 18 bar above, as used herein, it shall be termed *"high pressure nanofiltration".* Lastly, as used herein the term *"reverse osmosis"* shall be understood as referring to a high-pressure membrane process where the applied pressure is used to overcome osmotic pressure. Reverse osmosis usually allows to retain particles having size of 0.00005 µm to 0.0001 µm and larger, i.e. almost all particles and ionic species. Substances with molecular weight above 50 Dalton are retained almost without exception. Operating pressures are typically between 21 and 76 bar, but may reach up to 150 bar in specific applications.
¹ Wherein the unit bar equals 100,000 Pa, in accordance with the definition of IUPAC, [1 Pa= 1 N/m^2 = 1 kg/m*s^2 in SI units.]

Further, as used herein the term *"volatile flavour components"* shall be understood as any of the substances comprised in beer that contribute to its complex olfactory profile, said substances by their chemical nature having a boiling point lower than that of water. Examples of volatile beer flavour components include but are not limited to acetaldehyde, N-propanol, ethyl acetate, isobutyl alcohol, isoamyl alcohol, isoamyl acetate, ethyl hexanoate, ethyl octanoate, and many more.

### DEATAILED DESCRIPTION OF THE INVENTION

The present invention concerns method for preparing alcohol-enriched beer concentrate, said method comprising the steps of:
a) Subjecting beer or cider (1) to a first concentration step comprising nanofiltration (A) or reverse osmosis to obtain a retentate (2) and a fraction comprising alcohol and volatile flavour components (3), wherein the retentate (2) is characterised by the concentration of unfilterable compounds equal to or higher than 20% (w/w), preferably 30% (w/w), most preferably 40% (w/w), as calculated from density measurement corrected for the alcohol amount;
b) Subjecting the fraction comprising alcohol and volatile flavour components to a next concentration step comprising distillation, fractionation, or reverse osmosis, to obtain a concentrated fraction comprising alcohol and volatile flavour components and a leftover fraction;
c) Combining the retentate from a) with the concentrated fraction comprising alcohol and volatile flavour components from b) to obtain the beer concentrate.

In a particular embodiment, the present invention concerns method for preparing alcohol-enriched beer concentrate, said method comprising the steps of:
a) Subjecting beer or cider to a first concentration step comprising nanofiltration to obtain a retentate (2) and a fraction comprising alcohol and volatile flavour components, wherein the retentate (2) is characterised by the concentration of unfilterable compounds equal to or higher than 30% (w/w), preferably 35% (w/w), most preferably 40% (w/w), as calculated from density measurement corrected for alcohol amount;
b) Subjecting the fraction comprising alcohol and volatile flavour components to a next concentration step comprising distillation, fractionation, or reverse osmosis, to obtain a concentrated fraction comprising alcohol and volatile flavour components and a leftover fraction;
c) Combining the retentate from a) with the concentrated fraction comprising alcohol and volatile flavour components from b) to obtain the beer concentrate.

Figure 1 schematically illustrates general scheme of the method for concentrating beer according to the present invention. As a first step, beer (1) is subjected to nanofiltration (A) through a semi-permeable membrane acting as physical barrier to passage of most beer components of mean molecular weight (MW) > 150-200 Da, but permeable to water, majority of ethanol, monovalent salts and certain amount of beer flavour components. This first fraction retained on the membrane's inflow side is termed retentate (2) and is collected, whereas the fraction comprising alcohol and volatile flavour components is termed permeate (3) and is directed to a second concentration step (B). The second concentration step may involve fractionation, such as distillation, or reverse osmosis and results in separation of the permeate (3) from the previous nanofiltration step (A) into two fractions: first, a concentrated fraction comprising alcohol and flavour components (4), which is collected and blended with the collected retentate (2) from nanofiltration (A), resulting in final beer concentrate (6); and, secondly, a largely aqueous leftover fraction (5), that is discarded. The final beer concentrate (6) can now be stored or transported over distances and readily rehydrated to a reconstituted beer having a taste profile from highly resembling to identical to that of a fermented beer.

In general, beer (1) subjected to nanofiltration (A) according to the invention is preferably clear beer that was treated using any regular beer clarification technique to remove yeast and most of the other particles above 0.2 µm in diameter. Such techniques are standard and well known in the art of beer preparation. For example, they include centrifugation, filtration through e.g. kieselguhr (diatomaceous earth) optionally preceded by centrifugation, or other types of standard microfiltration techniques.

As can be appreciated from the present disclosure, the method of the invention is particularly advantageous for obtaining low-volume high-density beer or cider concentrates. The degree of concentration of the final product largely depends on the degree of concentration of the retentate obtained via nanofiltration in step a). Therefore, the present invention provides a method wherein the retentate not only comprises majority of beer (or cider) flavour components but also can potentially be characterised by a high concentration factor of 5, 10, 15, or even 20 or higher.

A used herein the term *"concentration factor"* shall be understood as the ratio of the beer or cider volume subjected to nanofiltration or reverse osmosis in step a) to the volume of the obtained retentate at the end of the nanofiltration or reverse osmosis in step a), i.e. the ration of the feed volume to the volume of the retentate obtained in the step a) of the method of the present invention. In an particularly preferred embodiment, a method in accordance with the previous embodiments is provided, wherein the retentate obtained in step a) is characterised by concentration factor of 5 or higher, preferably 10 or higher, more preferably 15 or higher, most preferably 20 or higher. A relationship between the concentration factor within the above-defined meaning, and the concentration of unfilterable compounds possible to be obtained in the retentate from step a) naturally depends on the type of beer or cider initially subjected to nanofiltration or reverse osmosis, which is shown and can be appreciated from in the graph presented in Figure 5, wherein each line represents a different beverage (lines 1-4 were obtained for different beers, line 5 obtained for cider)

Concentration factors of 10 and above can advantageously, in terms of speed and performance, be obtained by, as used herein, a high-pressure nanofiltration, i.e. nanofiltration conducted under a pressure of minimum 18 bar. Thus, in preferred embodiments of the invention, a method is provided wherein the nanofiltration in step a) is a high-pressure nanofiltration, defined as nanofiltration conducted under a pressure in the range of about 18-41 bar, preferably in the range of about 20-35 bar, most preferably about 30 bar.

In case of cross-flow filtration we can always achieve the concentration one pass. But to make the operation more economical multi stages operation is done.

In line with the above, the present invention is based on the finding that nanofiltration of beer, high-pressure nanofiltration in particular, not only allows to retain majority of important beer flavour compounds in the retentate but also provides concentration potential substantially superior to the one of ultrafiltration or reverse osmosis, potentially allowing to obtain retentate of density comprised between 20-50°P or higher even after a single filtration pass. In an advantageously economical embodiment, nanofiltration is performed as a multistage operation, wherein the retentate is progressing from one stage to the next one while becoming more and more concentrated. The preferred final density value of the retentate obtainable according to step a) of the present invention is comprised between 30-80 °P or higher, preferably between 50-70 °P, most preferably about 60 °P. Therefore, in one advantageous embodiment of the invention, the retentate from step a) is obtained in a single pass of nanofiltration, preferably being high-pressure nanofiltration, more preferably high-pressure nanofiltration conducted under a pressure range comprised between 18-35 bar, most preferably between about 20-30 bar.

It has been observed that such high concentration potential can particularly be achieved using polymeric spiral membranes in range of 150-200 Daltons or similar. Examples of such membranes include thin film composite ATF (alternating tangential filtration, Refine Technology) membranes such as the ones currently available from DOW and Parker domnick hunter.

After the nanofiltration step, the highly concentrated retentate is collected while the aqueous permeate is fed to the second concentration step b) in order to selectively retrieve ethanol and volatile flavour components, said step either comprising reverse osmosis or fractionation, preferably comprising distillation, and/or combination thereof.

Distillation is a classic example of a fractionation technique known to be particularly suited for separating alcohol and volatile component from water. The term *"distillation"* as used herein refers to the separation of the liquid mixture into the components thereof by utilising the difference in relative volatility and/or boiling point among the components by inducing their successive evaporation and condensation in the process of heating and cooling. Examples of the distillation may include simple distillation, fractional distillation, multistage distillation, azeotropic distillation, and steam distillation. In a preferred embodiment, a method of the invention is provided wherein the concentration in step b) comprises aromatic distillation, said distillation defined as distillation configured to ensure high retrieval of aroma-producing compounds. Figure 2 shows a specific embodiment of the general method according to the invention, wherein the second concentration (B) is performed by fractional distillation, as schematically illustrated by the presence of fractionating column.

Distillation forms part of a larger group of separation processes based on phase transition, collectively termed as *"fractionation".* Other examples of fractionation comprise column chromatography that is based on difference in affinity between stationary phase and the mobile phase, and fractional crystallization and fractional freezing both utilising the difference in crystallisation or melting points of different components of a mixture at a given temperature. In an advantageous arrangement of the present invention, method b) may comprise such fractionation, preferably distillation, arrangement, wherein different fractions are analysed for the presence of different components such as different volatile flavour component species and then selectively directed for pooling with the retentate from step a) or discarded, which would provide greater control over aroma profile of the final beer concentrate of the invention.

In a possible embodiment of the present invention, the step b) of the method of the invention first comprises reverse osmosis; and then further comprises at least one additional treatment of the fraction comprising ethanol, obtained following said reverse osmosis, said treatment comprising fractionation, preferably distillation, or reverse osmosis. In said embodiment the aqueous permeate being the fraction comprising alcohol and volatile flavour components is first subjected to a step comprising reverse osmosis to obtain a fraction comprising alcohol and volatile flavour components at a higher concentration than before the step comprising reverse osmosis and leftover fraction, after which said fraction comprising alcohol and volatile flavour components is further subjected to at least one further concentration step comprising fractionation, preferably distillation, or reverse osmosis, to obtain a concentrated fraction comprising alcohol and volatile flavour components and a leftover fraction.

A in a further development of the embodiments of the present invention, a method is provided wherein the reverse osmosis is a high resolution reverse osmosis i.e. reverse osmosis conducted under operating pressure comprised within the range of 60-120 bar and at temperature of 0-12 °C.

Because the present invention aims to provide highly concentrated beer base in order to minimise costs of its transportation, it is desirable that the concentrated fraction comprising alcohol and volatile flavour components from step b) prior to combining with the retentate in step c) is also maximally concentrated. Therefore, in a preferred embodiment of the present invention, the concentrated fraction comprising alcohol and volatile flavour components from step b) comprises between 90-99 % ABV, preferably at least 94 % ABV. As used herein the term "% ABV" or "percent alcohol by volume" refers to a worldwide standard measure of how much ethanol is contained in an alcoholic beverage, expressed as a percentage of total volume. In a possible embodiment in accordance with previous embodiments, a method is provided wherein concentration step b) is repeated until the concentrated fraction comprising alcohol and volatile flavour components comprises 90-99 % ABV.

In a preferred embodiment, beer subjected to the method of the invention is beer of gravity higher than 11 °P, preferably is high gravity beer defined as beer of original gravity of 14-25 °P or even higher. Concentration of high gravity beer is preferred for being applied to the method of the present invention as such arrangement provides synergistic approach resulting in final concentrates characterized by very high concentration factors, not obtainable by any method so far known in the art. As it will, however, be immediately appreciated by any skilled person, any commercial grade beer can be subjected to the provided herein method to obtain a beer concentrate of the present invention. In line with the above, in another preferred embodiment in accordance with the above embodiments, beer subjected to the method of the invention is any beer comprising alcohol concentration comprised between 2- 16 % ABV, preferably between 4-12 % ABV, most preferably between 6-10 % ABV.

For example, beer (1) of original gravity of 11°P (before fermentation), after fermentation can have alcohol concentration of about 5 % ABV (RDF 82%) and extract density equal to 2 °P of non-fermented sugars and other compounds. During nanofiltration (B) according to the method of the invention, for example 100 hL of such beer will be separated in 2 flows:
- 5 hL of concentrated retentate (2) having extract value of about 40 °P of non-fermented sugars and about 5 % ABV, and
- 95 hL of aqueous permeate (3) containing mainly water, alcohol at concentration of about 5 % ABV, and some fraction of volatile aroma compounds.

In the above example, the concentration factor (calculated by dividing the flow of retentate (2) by the flow of the beer or cider (1) fed into the nanofiltration system) of the final retentate (2) is about 20, which appears impressive as compared to concentration factors achieved by currently known methods. Defining the extent to which an alcoholic beverage was concentrated, however, by simply using concentration factors is can be confusing and is insufficient as the concentration factors depend on the initial concentration of the liquid fed to a membrane-based concentrating system. For example, very diluted liquids can be concentrated several to many folds more than their denser (more concentrated) counterparts, as they contain more water and thus can be volumetrically reduced to greater extent by removing this water through a filtration membrane. A much more exact way of defining the concentration extent in such case is by measuring or estimating the amount of unfilterable components of a liquid subjected to filtration that remained in the retentate (or in the final concentrate) after the membrane-based concentration process. For better understanding, Figure 3 shows the relationship between the amount of unfilterable components ("% solids"; x-coordinate) obtained for different retentates of different alcoholic beverages, and their corresponding concentration factors ("conc. factor", y-coordinate); the values obtained for six different alcoholic beverages correspond to curves 1-6. The alcoholic beverages included five beer varieties and one type of cider; they are characterized in the Table 1 given below.

**Table 1. Alcoholic beverages subjected to nanofiltration according to the method of the invention.**

| **beverage** | **beer 1** | **beer 2** | **beer 3** | **beer 4** | **beer 5** | **cider** |
|---|---|---|---|---|---|---|
| **curve no.** | 1 | 2 | 3 | 4 | 5 | 6 |
| **original gravity** | 16.30% | 17.50% | 16.00% | 11.00% | 22.00% | 15.95% |
| **RDF** | 62.00% | 67.00% | 75.00% | 82.00% | 92.00% | 85.00% |
| **ABV %** | 5.61% | 6.51% | 6.67% | 5.00% | 11.24% | 9.00% |

In preferred embodiments of the invention, the higher range of concentrations of the unfilterable components (30% and above) as exemplified above and in Figure 3, can e.g. be achieved in nanofiltration installations operating in cross-flow or tangential flow filtration mode, wherein the beer flow travels tangentially across the surface of the nanofiltration membrane. A schematic illustration of cross-flow filtration with recirculation is depicted in Figure 3 that also lists beer (1) compound species that are retained (2) by the nanofiltration membrane vs the species that pass through the membrane forming the permeate (3). Cross-flow modes are preferred over dead-end filtration modes as they promote shear to prevent membrane fouling. Recirculation (depicted by arrow pointing backwards) further serves to increase the filtration efficiency. The nanofiltration unit as depicted in Figure 4 can advantageously be employed in a multi stage multi-stage nanofiltration operation, as schematically showed in Figure 5 depicting a nanofiltration installation comprising 3 connected nanofiltration units (I, II, III). In such nanofiltration arrangement, beer (1) is configured to pass from one unit (stage) to the next one while becoming more and more concentrated via nanofiltration. After the final stage, the final retentate (3) is obtained, which in present example would be about 5 hL with the concentration factor of 20. Of course, as can be appreciated by any skilled person the amount of units in a multi-stage nanofiltration installation can vary depending on the intended process design.

As mentioned above, in particularly preferred embodiments the first step nanofiltration (A) employs high pressure nanofiltration, i.e. nanofiltration operating under inlet pressure of 18 bar and above, typically comprised between from 20 to 30 bar. Such nanofiltration can be performed at ambient temperature (20°C) or below, possibly bat 10 °C or lower.

Following the nanofiltration step (A), the obtained permeate is subjected to the second concentration step (B), for example, as schematically illustrated in Figure 2, via fractional distillation on a fractionating column. Such arrangement is advantageous as different flavour component fractions can be selectively collected or discarded from the column, which allows greater control over the preferred flavour/aroma profile of the final beer concentrate of the invention. Typically, distillation will be configured to provide a highly concentrated fraction comprising alcohol and aromas (4), i.e. a fraction comprising between 90-98 % ABV, which will be blended in the last step of the present method with the retentate (2) from the nanofiltration step (B). Following present example, for ease of calculations it can be assumed that distillation process provided alcohol solution of e.g. 95 % ABV in a volume of 5 hL. Blending said distillate (4) and the previously obtained 5 hL of the nanofiltration retentate (2) will result in 10 hL of the final concentrate (6) having extract value of 20 °P and 50 % ABV.

Beer or cider concentrates (6) according to the present invention can achieve final concentration of unfilterable compounds (following addition of the concentrated ethanol fraction (4) to the nanofiltration retentate(2)) equal to or higher than 8%, 10%, 15%, 20%, 25%, even up to 30% (w/w), which is equivalent to the final concentration factor (calculated as a ratio of starting volume of beer or cider (1) to the volume of the final concentrate (6)) ranging from 4 to 6 or even 6.5.

In line with this, in a preferred embodiment, the present invention provides a beer or cider concentrate (6) having extract density equal to or higher than at least 18 °P, preferably at least 20 °P, more preferably at least 25 °P or even higher.

In another preferred embodiment, a beer or cider concentrate is provided according to the previous embodiment, further comprising alcohol concentration comprised between 25 - 70 % ABV, preferably between 30 - 50 % ABV.

Such obtained final beer or concentrates (6) can now be stored or transported at costs to a desired destination place, where they can be readily reconstituted to a final beverage of olfactory properties highly resembling or virtually identical to normally-brewed beer.

In some embodiments of the present invention, it may be advantageous to store and transport the highly concentrated retentate (2) obtained in the first concentration step a) on its own, without blending with the ethanol fraction (4). In such embodiment, the present invention also provides a liquid composition characterised by the concentration of unfilterable compounds obtained from beer or cider, said concentration equal to or higher than 20% (w/w), preferably 30% (w/w), most preferably 40% (w/w), as calculated from density measurement corrected for the alcohol amount. In another similar embodiment, the present invention further provides a liquid composition characterised by the concentration of unfilterable compounds obtained from beer or cider, said concentration equal to or higher than 30% (w/w), preferably 35% (w/w), most preferably 40% (w/w), as calculated from density measurement corrected for the alcohol amount.

In a further aspect the present invention also concerns a method for preparing beer or cider, said method comprising the steps of:
a) Obtaining the beer or cider concentrate according to the method of any previously-described embodiments of the present invention
b) Diluting said concentrate from step a) of the present method with a diluent in order to obtain a reconstituted beer or cider.

In a preferred embodiment of the above method for preparing beer (or cider), said diluent is preferably water or carbonated water, but can also be a different beverage such a s different beer type like a neutral base beer having very week flavour and aroma. In the latter case, blending of a beer concentrate of the present invention with a weaker beer base would serve boosting the flavour and/or aroma properties and alternatively alcohol content of the base and constitutes a powerful approach of providing a wide range of speciality beers or beers having personalized aroma and taste combinations, which can be easily prepared even very far away from their brewery of origin.

In preferred embodiments, the concentrates (6) of the present invention can be diluted from about 5 to 10 times (or even more) for obtaining reconstituted beers having aroma and flavour profiles and alcohol concentrations reminiscent of or identical to the ones of a naturally-brewed beer.

According to a preferred embodiment of the method for preparing beer or cider according to the invention, the density of the reconstituted beer or cider is comprised between 7-15 °P, but can be higher depending on the desired final product.

In another preferred embodiment of the method for preparing beer or cider of the invention, in accordance with the afore-mentioned embodiments, the alcohol concentration of the reconstituted beer or cider is comprised between 2 to 10 % ABV, preferably 3 to 9 % ABV, most preferably between 3 to 8 % ABV; but can be adjusted to different values depending on preferences of local consumers for which the final product is directed. As will be immediately appreciated by any skilled person, for obtaining reconstituted beer of a satisfactory flavour profile, the beer concentrate of the present invention does not have to be diluted to obtain the beer of exactly the same density as the one of the beer initially subjected to the concentration method of the invention, especially if the latter one was a high gravity beer of high-ethanol content; it is possible to dilute it more. For example if a strong-flavoured high gravity beer of ethanol content of 14 % ABV was used and then concentrated to a beer base of the invention comprising 60 % ABV, it is conceivable that the concentrate can be diluted 12 times to obtain a final reconstituted lighter beer of 5 ABV, still having sufficient beer flavour and aroma, mouthfeel and colour to be accepted by most consumers.

Lastly, the present invention also concerns the direct products of the two aforedisclosed methods and their preferred embodiments. Therefore, in one embodiment of the present invention, beer or cider concentrate is provided that obtained according to the method for preparing beer concentrate of the invention. Similarly, in a further embodiment of the present invention, the final beverage - beer or cider - is provided obtained according of the method for preparing beer of the invention, i.e. by blending the beer or cider concentrate of the invention with a diluent, such as water or carbonated water.

## Claims

1. A method for preparing beer concentrate, comprising the steps of:
a) Subjecting beer or cider (1) to a first concentration step comprising nanofiltration (A) or reverse osmosis to obtain a retentate (2) and a fraction comprising alcohol and volatile flavour components (3), wherein the retentate (2) is **characterised by** the concentration of unfilterable compounds equal to or higher than 20% (w/w), preferably 30% (w/w), most preferably 40% (w/w), as calculated from density measurement corrected for the alcohol amount;
b) Subjecting the fraction comprising alcohol and volatile flavour components (3) to a next concentration step (B) comprising fractionation, preferably being distillation, or reverse osmosis, to obtain a concentrated fraction comprising alcohol and volatile flavour components (4) and a leftover fraction (5);
c) Combining (C) the retentate (2) from a) with the concentrated fraction (4) comprising alcohol and volatile flavour components from b).

2. Method according to claim 1 or 2, wherein the nanofiltration (A) in step a) is a high-pressure nanofiltration, defined as nanofiltration conducted under a pressure in the range of 18-41 bar, preferably in the range of 20-30 bar.

3. Method according to claim 1, wherein the retentate (2) obtained in step a) is **characterised by** a concentration factor of 10 or higher, preferably of 15 or higher, most preferably of 20 or higher, as compared to beer (1) subjected to concentration.

4. Method according to any of the preceding claims, wherein the second concentration step (B) in b) comprises aromatic distillation.

5. Method according to any of the preceding claims, wherein the second concentration step (B) in b) first comprises reverse osmosis, and then further comprises at least one additional treatment of the fraction comprising ethanol obtained following said reverse osmosis, said treatment comprising distillation, fractionation, or reverse osmosis.

6. Method according to any of the preceding claims, wherein the concentrated fraction (4) comprising alcohol and volatile flavour components from step b) comprises between 90-99 % ABV.

7. Method according to any of the preceding claims, wherein beer (1) subjected to concentration is high gravity beer defined as beer of original gravity of 14-25 °P or even higher.

8. Method according to any of the preceding claims, wherein beer (1) subjected to concentration comprises alcohol concentration comprised between 2- 16 % ABV, preferably between 2.5-10 % ABV, most preferably between 3-8 % ABV.

9. Liquid composition **characterised by** the concentration of unfilterable compounds obtained from beer or cider, said concentration equal to or higher than 20% (w/w), preferably 30% (w/w), most preferably 40% (w/w), as calculated from density measurement corrected for the alcohol amount.

10. A method for preparing beer comprising the steps of:
a) Obtaining the beer concentrate according to according to the method of claims 1-10;
b) Diluting said concentrate from step a) with a diluent to obtain a reconstituted beer.

11. A method according to claim 10, wherein said diluent is water or carbonated water.

12. A method according to claim 10 or 12, wherein the density of the reconstituted beer is comprised between 7 -15 °P.

13. A method according to any of claims 10 to 12, wherein the alcohol concentration of the reconstituted beer is comprised between 2-10 % ABV, preferably 3 to 9 % ABV, most preferably between 3 to 8 % ABV.

14. A beer or cider concentrate (6) having extract density equal to or higher than at least 18 °P, preferably at least 20 °P, more preferably at least 25 °P.

15. A beer or cider concentrate (6) according to claim 14, wherein said concentrate further comprises alcohol concentration comprised between 25 - 70 % ABV, preferably between 30 - 50 % ABV.
